# EUROPEAN PATENT APPLICATION

(11) **EP 1 696 299 A2**
(43) Date of publication of application: **30.08.2006**
(21) Application number: 06110174.7
(22) Date of filing: 20.02.2006
(51) Int. Cl.: G05D 23/13

(54) **Pressure balancer**

(30) Priority: 25.02.2005 IT TO20050122
(71) Applicant: Visconti, Marco, 28017 S. Maurizio d'Opaglio (Novara) (IT)
(72) Inventor: Visconti, Marco, 28017 S. Maurizio d'Opaglio (Novara) (IT)
(74) Representative: Serra, Francesco

(57) **Abstract**

A pressure balancer for mixed hot and cold water is described, said balancer comprising a body (20), a shuttle balancing valve (26) with slits (27) co-operating with a diaphragm (28) which separates chambers (C, D). The valve (26) is able to be displaced horizontally depending on a variation in pressure of hot or cold water so as to move towards the lower pressure chamber (C, D).

## Description

The present invention relates to a pressure balancer of the type which is installed at the entrance to a bathroom, with a sanitary water supply system of the conventional type having parallel connections or a supply system with header, or on the individual sanitary apparatus.

More precisely, the present invention relates to a pressure balancer for single-control mixers, thermostatic mixers or conventional dual-water taps for hygienic and sanitary use.

The main function of the pressure balancer according to the invention is that of keeping the mixing ratio of the hot and cold water constant.

In the mechanical single-control mixers of usual design, the ceramic disk cartridge ensures mixing of the hot and cold water on the assumption that there is always a constant balance between the two hot and cold water pressures. In reality, this is practically never the case, so that it is necessary to make continuous adjustments to the mixer handle in order to be able to achieve a relatively constant temperature of the water being supplied.

The balancer according to the present invention eliminates instantaneously any imbalance in the pressure of the water flows supplied to the mixer, due mainly to random opening of other taps within the same living premises, thus ensuring that the mixing ratio of hot water and cold water, and consequently the temperature of the final mixed water used, remains constant.

In the case of installation of thermostatic mixers, where delicate mechanisms and thermal sensors are required to keep the outgoing temperature constant, very long times are required owing to the hysteresis of the thermostatic element, with the risk of scalding or cold showers.

The object of the present invention is to provide a pressure balancer whic h overcomes the abovementioned drawbacks, is easy to manufacture, has a relatively low cost and is easy to install.

The present invention achieves the abovementioned objects by means of a pressure balancer having the characteristic features described in detail in the claims which follow.

Further characteristic features and advantages of the present invention will become clear during the course of the detailed description below, provided purely by way of a non-limiting example, with reference to the accompanying drawings in which:

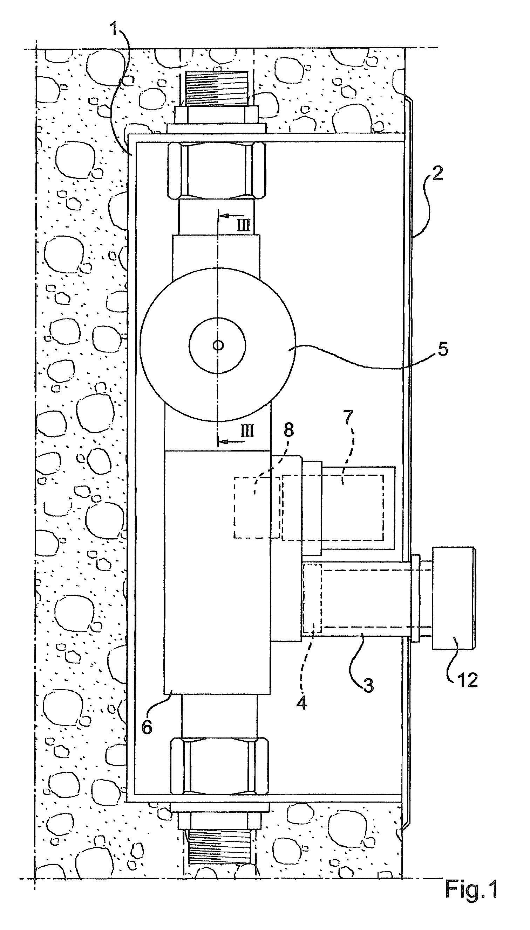

- Fig. 1 is a cross-sectional side view of the unit composed of a pressure balancer, a shut-off tap and a filter-equipped regulating system, a casing for mounting in the wall, and a system of cap nuts for assembly without spanners;

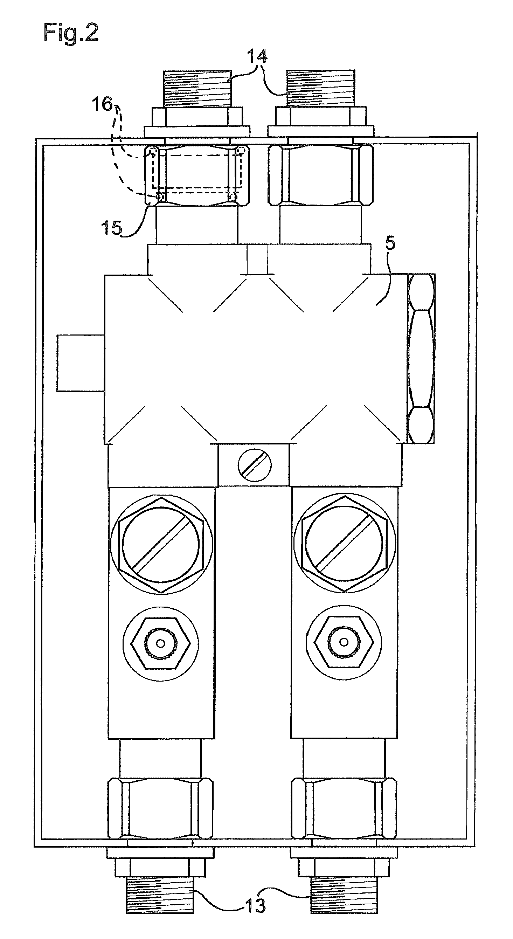

- Fig. 2 is a front view of the unit according to Fig. 1;

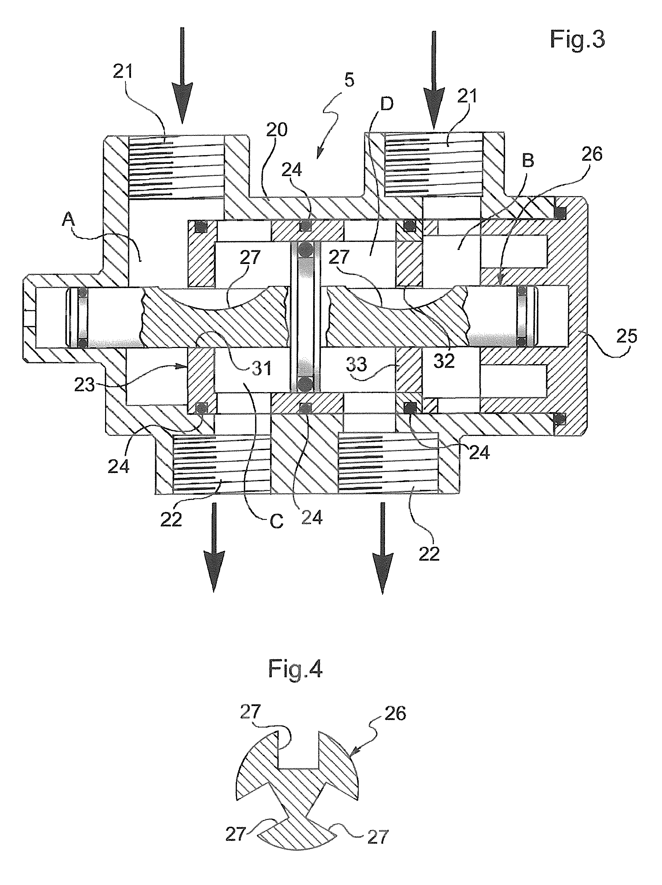

- Fig. 3 shows a cross-section through the body of the pressure balancer according to the invention, along the line III-III of Fig. 1; and
- Fig. 4 shows a cross-section along the plane IV-IV shown in Fig. 3.

With reference to the drawings, the unit comprising the pressure balancer according to the invention is composed of a casing 1, normally made of plastic, to be mounted in a wall M, covering of which is performed by means of the plate 2 which is pressed towards the wall M by the fitting 3 screwed onto the shut-off tap 4.

The casing 1 houses internally the pressure balancer 5 according to the invention on which there are mounted the connectors 6 housing the filters 7, the non-return valves 8 and the shut-off and regulating taps 4 provided with the fitting 3 for fixing the covering plate 2 and the operating handle 12.

The entire unit is mounted on incoming pipe unions 13 and outgoing pipe unions 14. These unions are designed to allow mounting and removal of the entire unit by manual means alone, without the need for spanners.

In fact, the cap nut 15 is screwed onto the unions 12 and 13 by means of simple screwing performed manually, since the hydraulic seal is ensured by two rubber 0-rings 16.

The pressure balancer 5 according to the present invention comprises a brass body 20, provided with two inlets 21 and two outlets 22, for the cold and hot water, respectively.

This body houses internally a fitting 23 provided with three 0-rings 24 and held in position by a plug 25. The fitting 23 houses internally in a slidable manner the balancing valve 26 provided with variable cross-section slits 27 able to regulate the flow of the hot and cold water through the seats 31 and 32 and a diaphragm 28 provided with an 0-ring 29 for ensuring that there is no communication between cold water and hot water.

The seat 32 is formed inside the fitting 33 screwed onto the fitting 23, after insertion of the balancing valve 26.

Operation of the device according to the present invention is now described.

The two hot and cold water supplies reach the two inlet unions 21 communicating with the chambers A and B; then, via the slits 27 provided on the shuttle balancing valve 26, they pass into the two balancing chambers C and D, which are kept separated by the diaphragm 28 provided with an 0-ring 29.

When the incoming pressures are the same and no water is being drawn from the tap, the valve 26 remains in the middle position in perfect equilibrium. During use of any sanitary apparatus, such as a washbasin, bidet, bath, sink, etc., the two flows of hot and cold water pass into the hot chamber C and cold chamber D via the slits 27 of the valve 26 and the seats 31 and 32 provided on the cylinder 23 and on the endpiece 33.

In the event of a change in pressure of the hot and cold water, the diaphragm 28 moves away from the chamber where the greater pressure is generated, pushing the valve 26 towards the lower pressure chamber, thus reducing the flow cross-section between the valve 26 and the seats 31 and 32 of the higher pressure chamber, while the flow cross-section of the lower pressure seat is increased until the pressures are balanced, thus allowing the temperature of the mixed outgoing water to remain constant, since the mixing ratio of the hot and cold water remains constant.

In the case where one of the two water supplies should fail, the balancer interrupts instantaneously the flow of the water which is left in operation, preventing scalding or cold showers.

The advantages of the balancer according to the invention are evident from the description above.

The balancer intervenes immediately so that the mixing ratio remains always constant in real time.

The relative simplicity in the design of the balancer ensures reliable and durable operation over time.

Obviously, without affecting the principle of the invention, ample variations may be made to that described and illustrated, without thereby departing from the scope of protection of the said invention.

## Claims

1. Pressure balancer for mixed hot and cold water, **characterized in that** it comprises a body (20) comprising a shuttle balancing valve (26) with slits (27) co-operating with a diaphragm (28) which separates chambers (C, D), the valve (26) being able to be displaced horizontally depending on variations in pressure of hot or cold water, moving towards the lower pressure chamber (C, D).

2. Pressure balancer for mixed hot and cold water according to Claim 1, **characterized in that** the slits (27) have a variable cross-section.

3. Pressure balancer for mixed hot and cold water according to Claims 1 and 2, **characterized in that** the slits (27) ensure that there is a proportional flow of mixed water during the whole displacing movement of the balancing valve (26).

4. Pressure balancer for mixed hot and cold water according to Claims 1 to 3, **characterized in that** it is installed with connections arranged in parallel.

5. Pressure balancer for mixed hot and cold water according to Claims 1 to 3, **characterized in that** it is installed with a header supply system.
